(19) Europäisches Patentamt
European Patent Office
Office européen des brevets

(11) Veröffentlichungsnummer: **0 001 066**
**B1**

(12) **EUROPÄISCHE PATENTSCHRIFT**

(45) Veröffentlichungstag der Patentschrift: **25.02.81**

(51) Int. Cl.³: **C 08 L 75/04,** C 08 G 18/63

(21) Anmeldenummer: **78100711.7**

(22) Anmeldetag: **21.08.78**

(54) **Stabile Suspensionen anorganischer Füllstoffe in organischen Polyhydroxylverbindungen und deren Verwendung zum Aufbau von geschäumten oder nicht geschäumten Polyurethanen.**

(30) Priorität: **02.09.77 DE 2739620**

(43) Veröffentlichungstag der Anmeldung: **21.03.79 Patentblatt 79/6**

(45) Bekanntmachung des Hinweises auf die Patenterteilung: **25.02.81 Patentblatt 81/8**

(84) Benannte Vertragsstaaten: **BE DE FR GB SE**

(56) Entgegenhaltungen:
**FR-A-1 364 829**
**US-E-28 715**

(73) Patentinhaber: **BAYER AG, Zentralbereich Patente, Marken und Lizenzen, D-5090 Leverkusen 1, Bayerwerk (DE)**

(72) Erfinder: ***von Bonin, Wulf, Dr., Mendelssohn-Strasse 30, D-5090 Leverkusen (DE)***
Erfinder: **Vehlewald, Peter, Dr., Fasanenstrasse 20, D-5653 Leichlingen (DE)**

**EP 0 001 066 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).

BUNDESDRUCKEREI BERLIN

# Stabile Suspensionen anorganischer Füllstoffe in organischen Polyhydroxylverbindungen und deren Verwendung zum Aufbau von geschäumten oder nicht geschäumten Polyurethanen

Die vorliegende Erfindung betrifft stabile Suspensionen von anorganischen Füllstoffen in zur Herstellung von Polyurethanen geeigneten Polyhydroxylverbindungen sowie ihre Verwendung zur Herstellung von Polyurethankunststoffen.

Die Kombination von organischen und anorganischen Rohstoffen zu einem Kombinationswerkstoff ist technisch seit langem üblich, z. B. beim Füllen von Kautschuken oder Thermoplasten mit anorganischen Füllstoffen, beim Pigmentieren von Lacken mit anorganischen Pigmenten oder in der Preßmassenherstellung.

Im Gegensatz zu den obengenannten Kautschuken, Thermoplasten oder Preßmassen, die im wesentlichen Feststoffe darstellen und in denen die einmal eingearbeiteten Füllstoffe ihren Verteilungsgrad praktisch unverändert beibehalten, handelt es sich bei den in der Polyurethanchemie gebräuchlichen Polyolen um flüssige Stoffe, die erst nach der Reaktion mit den Polyisocyanaten in Festkörper oder Kautschuke übergehen (im folgenden werden die Ausdrücke »Polyol« und »Polyhydroxylverbindung« synonym verwendet).

Anorganische Füllstoffe weisen im allgemeinen spezifische Gewichte über 2 auf, während die spezifischen Gewichte der Polyole zumeist im Bereich um 1 liegen. Es besteht daher zwischen beiden Komponenten ein so großer Unterschied der spezifischen Gewichte, daß Suspensionen auch sehr fein gemahlener anorganischer Pigmente in den Polyolen nach einiger Zeit sedimentieren, insbesondere dann, wenn die Polyole die für die Verarbeitung in der Praxis im allgemeinen erforderlichen relativ niedrigen Viskositäten besitzen.

Dieser Umstand stellt ein erhebliches Hindernis für einen Einsatz anorganischer Füllstoffe in der Polyurethanchemie dar. Es besteht der verständliche Wunsch, derartige Suspensionen in lagerstabiler Form zur Verfügung zu haben, so daß sich ein zusätzlicher Mischprozeß während der Lagerung oder vor der Verwendung zwecks Homogenisierung erübrigt.

Die Aufgabe der vorliegenden Erfindung bestand somit in der Bereitstellung von lagerstabilen Suspensionen anorganischer Füllstoffe in Polyolen, wie sie zur Herstellung von Polyurethanen Verwendung finden.

Überraschenderweise konnte diese Aufgabe dadurch gelöst werden, daß man die anorganischen Füllstoffe in Polyhydroxylverbindungen, denen als Stabilisatoren Carboxylgruppen aufgepfropft enthaltende Polyhydroxylverbindungen zugefügt werden, dispergiert und in den Suspensionen die Carboxylgruppen durch anorganische oder organische Basen ganz oder teilweise neutralisiert. Diese Suspensionen sind lagerstabil und lassen sich störungsfrei in Polyurethane überführen.

Es wurden in der DAS 1 152 537 (FR-PS 1 364 829) die Herstellung von homogenen Polyurethankunststoffen beschrieben, wobei als Polyhydroxylverbindungen solche verwendet werden, in denen vorher Polymerisate oder Mischpolymerisate aus polymerisierbaren, ungesättigten Verbindungen in situ unter Pfropfpolymerisatbildung mit der Polyhydroxylverbindung hergestellt worden sind. So entstehen aus Acrylnitril- und Vinylacetat-modifizierten Polyhydroxylverbindungen Polyurethane erhöhter Einreißfestigkeit und Festigkeit. Zur Herstellung der als solche — d. h. ohne Zugabe von anorganischen Füllstoffen — lagerstabilen Hydroxylgruppen enthaltenden Produkte können auch Acrylsäure oder Methacrylsäure verwendet werden. Dieser Literaturstelle ist jedoch nicht zu entnehmen, daß solche Pfropf-Polyole, welche gemäß der vorliegenden Erfindung anteilig verwendet werden sollen, als Dispergierstabilisatoren wirksam sind und besonders stabile Suspensionen anorganischer Füllstoffe dann ergeben, wenn die Carboxylgruppen ganz oder teilweise durch Basen neutralisiert sind.

Gegenstand der vorliegenden Erfindung sind lagerstabile Suspensionen von

(1) 0,5 bis 80 Gew.-% (bezogen auf gesamte Suspension) eines anorganischen Füllstoffs in

(2) 20 bis 99,5 Gew.-% (bezogen auf gesamte Suspension) an Polyhydroxylverbindungen mit aliphatisch oder cycloaliphatisch gebundenen Hydroxylgruppen,

wobei die Komponente (2) als Stabilisator 0,05 bis 10, bevorzugt 0,1 bis 3 Gew.-%, bezogen auf (1)+(2), eines Pfropfpolymerisats enthält, welches durch radikalische Polymerisation von

(a) 1 bis 35 Gew.-%, vorzugsweise 2 bis 20 Gew.-%, bezogen auf Pfropfpolymerisat, einer $\alpha,\beta$-olefinisch ungesättigten Carbonsäure sowie

(b) 0 bis 60 Gew.-%, vorzugsweise 5 bis 40 Gew.-%, bezogen auf Pfropfpolymerisat, an weiteren olefinisch ungesättigten Monomeren

in Gegenwart einer Polyhydroxylverbindung hergestellt wurde, dadurch gekennzeichnet, daß die Carboxylgruppen des Pfropfpolymerisats ganz oder teilweise durch organische oder anorganische Basen neutralisiert sind.

Gegenstand der vorliegenden Erfindung ist schließlich auch die Verwendung der nach dem erfindungsgemäßen Verfahren zugänglichen Dispersionen als Aufbaukomponente bei der Herstellung von geschäumten und ungeschäumten Polyurethankunststoffen nach dem Isocyanat-Polyadditionsverfahren.

Unter dem Begriff »anorganische Füllstoffe« sollen im Rahmen der vorliegenden Erfindung

auch die bekannten anorganischen Pigmente verstanden werden. Es kommen auch solche anorganische Füllstoffe in Betracht, deren Oberflächen mit organischen oder anorganischen Verbindungen mit neutralem, basischem oder saurem Charakter vorbehandelt worden sind, z. B. um deren Ladung oder Hydrophilie zu verändern. Es handelt sich bei den anorganischen Füllstoffen im wesentlichen um feste anorganische Stoffe, deren Teilchengestalt die Form von Nadeln, Blättchen, Kugeln oder unregelmäßigen Teilchen haben kann, die amorph, metamorph oder kristallin sein können und bei denen der Teilchendurchmesser im wesentlichen unter 10 Mikron liegt. Der Rückstand auf einem 40 µm-Sieb gemäß DIN 53 195 sollte unter 1 Gew.-% betragen.

Geeignete solche Füllstoffe sind z. B. Kaoline, Talkum, Glimmer, Tuff, Lava, Asbestmehl, Glas, Kreide, Dolomit, Bentonite, Alkali- oder Ammoniumphosphate und -polyphosphate, Erdalkaliphosphate und -polyphosphate, Ruß, Graphit, Zemente, Calciumoxid und -hydroxid, Calciumsulfate, Flugaschen, Schlacken, Gesteinsmehl, Titandioxid, Eisenoxide, Aluminiumoxide und -hydroxide, Quarz- und Schiefermehle, Kieselsäuren usw. Besonders gut geeignet sind für das erfindungsgemäße Verfahren neben Talkum, Kaolin und Aluminiumoxidhydraten vorzugsweise Calciumcarbonat enthaltende Füllstoffe wie Kreide oder Dolomit.

Als kontinuierliche Phase in den erfindungsgemäßen Füllstoff-Suspensionen dienen Carboxylgruppen aufweisende ganz oder teilneutralisierte Pfropfpolymerisate, wie sie durch Aufpfropfen von $\alpha,\beta$-olefinisch ungesättigten Carbonsäuren und gegebenenfalls weiteren olefinisch ungesättigten Monomeren auf Polyhydroxylverbindungen der in der Polyurethanchemie an sich bekannten Art und anschließende Neutralisation erhalten werden können, in Abmischung mit Carboxylgruppen-freien Polyhydroxylverbindungen.

Geeignete, durch die genannte Pfropfreaktion zu modifizierende (bzw. auch zur Abmischung verwendbare) Polyhydroxylverbindungen sind vorzugsweise bei Raumtemperatur flüssige Polyole der in der Polyurethanchemie an sich bekannten Art.

Diese Verbindungen weisen in der Regel 2 bis 8, vorzugsweise 2 bis 3 Hydroxylgruppen auf und liegen im Molekulargewichtsbereich über 500, vorzugsweise zwischen 1800 und 7000. Es kommen jedoch auch Polyolgemische in Betracht, die neben Polyolen des genannten Molekulargewichtsbereichs auch solche mit einem geringeren Molekulargewicht, beispielsweise zwischen 62 und 500, enthalten, wobei diese jedoch vorzugsweise im Gemisch in Mengen von weniger als 70 Gew.-% vorliegen. Bei den bevorzugten Polyhydroxylverbindungen handelt es sich um die obigen Ausführungen entsprechenden Polyhydroxypolyester, -polyäther, -polyacetale, -polycarbonate oder -polyesteramide. Die entsprechenden Polyhydroxypolyäther sind besonders bevorzugt, da sie einerseits im allgemeinen relativ niedrigviskos sind und zum anderen eine gute Pfropfgrundlage bilden.

Die in Frage kommenden Hydroxylgruppen aufweisenden Polyester sind z. B. Umsetzungsprodukte von mehrwertigen, vorzugsweise zweiwertigen und gegebenenfalls zusätzlich dreiweritigen Alkoholen mit mehrwertigen, vorzugsweise zweiwertigen, Carbonsäuren. An Stelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.

Als Beispiele hierfür seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäure wie Ölsäure, gegebenenfalls in Mischung mit monomeren Fettsäuren, Terephthalsäuredimethylester und Terephthalsäure-bis-glykolester. Als mehrwertige Alkohole kommen z. B. Äthylenglykol, Propylenglykol-(1,2) und -(1,3), Butylenglykol-(1,4) und -(2,3), Hexandiol-(1,6), Octandiol-(1,8), Neopentylglykol, Cyclohexandimethanol (1,4-Bis-hydroxymethylcyclohexan), 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Methylglykosid, ferner Diäthylenglykol, Triäthylenglykol, Tetraäthylenglykol, Polyäthylenglykole, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z. B. $\varepsilon$-Caprolacton oder Hydroxycarbonsäuren, z. B. $\omega$-Hydroxycapronsäure, sind einsetzbar.

Auch die erfindungsgemäß vorzugsweise in Frage kommenden, mindestens zwei, in der Regel zwei bis acht, vorzugsweise zwei bis drei, Hydroxylgruppen aufweisenden Polyäther sind solche der an sich bekannten Art und werden z. B. durch Polymerisation von Epoxiden wie Äthylenoxid, Propylenoxid, Butylenoxid, Tetrahydrofuran, Styroloxid oder Epichlorhydrin mit sich selbst, z. B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine, z. B. Äthylenglykol, Propylenglykol-(1,3) oder -(1,2), Trimethylolpropan, 4,4'-Dihydroxy-diphenylpropan, Anilin, Äthanolamin oder

Äthylendiamin hergestellt. Auch Sucrosepolyäther, wie sie z. B. in den deutschen Auslegeschriften 1 176 358 und 1 064 938 beschrieben werden, kommen erfindungsgemäß in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch durch Vinylpolymerisate modifizierte Polyäther, wie sie z. B. durch Polymerisation von Styrol und Acrylnitril in Gegenwart von Polyäthern entstehen (amerikanische Patentschriften 3 383 351, 3 304 273, 3 523 093, 3 110 695, deutsche Patentschrift 1 152 536), sind geeignet, ebenso OH-Gruppen aufweisende Polybutadiene.

Als Polyacetale kommen z. B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale lassen sich erfindungsgemäß geeignete Polyacetale herstellen.

Als Hydroxylgruppen aufweisende Polycarbonate kommen solche der an sich bekannten Art in Betracht, die z. B. durch Umsetzung von Diolen wie Propandiol-(1,3), Butandiol-(1,4) und/oder Hexandiol-(1,6), Diäthylenglykol, Triäthylenglykol oder Tetraäthylenglykol mit Diarylcarbonaten, z. B. Diphenylcarbonat, oder Phosgen hergestellt werden können.

Zu den Polyesteramiden und Polyamiden zählen z. B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate.

Vertreter dieser erfindungsgemäß zu verwendenden Verbindungen sind z. B. in High Polymers, Vol. XVI, »Polyurethanes, Chemistry and Technology«, verfaßt von Saunders-Frisch, Interscience Publishers, New York, London, Band I, 1962, Seiten 32—42 und Seiten 44—54 und Band II, 1964, Seiten 5—6 und 198—199, sowie im Kunststoff-Handbuch, Band VII, Vieweg-Höchtlen, Carl-Hanser-Verlag, München, 1966, z. B. auf den Seiten 45—71, beschrieben.

Selbstverständlich können Mischungen der obengenannten Verbindungen mit mindestens zwei gegenüber Isocyanaten reaktionsfähigen Wasserstoffatomen mit einem Molekulargewicht von 500—10 000, z. B. Mischungen von Polyäthern und Polyestern, eingesetzt werden.

Als erfindungsgemäß gegebenenfalls mit einzusetzende Ausgangskomponenten kommen auch Verbindungen mit mindestens zwei Hydroxylgruppen und einem Molekulargewicht von 62—500 in Frage. Auch diese Verbindungen weisen in der Regel 2 bis 8 Hydroxylgruppen auf, vorzugsweise 2 bis 3 Hydroxylgruppen.

Als Beispiele für derartige Verbindungen seien genannt: Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Glyzerin, Trimethylolpropan, Hexantriol-(1,2,6), Trimethyloläthan, Pentaerythrit, Chinit, Mannit und Sorbit und deren Äthoxylierungs- bzw. Propoxylierungsprodukte, Diäthylenglykol, Triäthylenglykol, Tetraäthylenglykol, Polyäthylenglykole mit einem Molekulargewicht bis 500, Dipropylenglykol, Polypropylenglykole mit einem Molekulargewicht bis 500, Dibutylenglykol, Polybutylenglykole mit einem Molekulargewicht bis 500, 4,4'-Dihydroxydiphenylpropan, Di-hydromethyl-hydrochinon, Diäthanolamin und Triäthanolamin.

Erfindungsgemäß können jedoch auch Polyhydroxylverbindungen eingesetzt werden, in welchen hochmolekulare Polyaddukte bzw. Polykondensate in feindisperser oder gelöster Form enthalten sind. Derartige modifizierte Polyhydroxylverbindungen werden erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) direkt in situ in den obengenannten, Hydroxylgruppen aufweisenden Verbindungen ablaufen läßt. Derartige Verfahren sind beispielsweise in den deutschen Auslegeschriften 1 168 075 und 1 260 142, sowie den deutschen Offenlegungsschriften 2 324 134, 2 423 984, 2 512 385, 2 513 815, 2 550 796, 2 550 797, 2 550 833 und 2 550 862 beschrieben. Es ist aber auch möglich, gemäß US-Patent 3 869 413 bzw. deutscher Offenlegungsschrift 2 550 860 eine fertige wäßrige Polymerdispersion mit einer Polyhydroxylverbindung zu vermischen und anschließend aus dem Gemisch das Wasser zu entfernen.

Bei der Verwendung von modifizierten Polyhydroxylverbindungen der obengenannten Art als Ausgangskomponente im Polyisocyanat-Polyadditionsverfahren entstehen in vielen Fällen Polyurethankunststoffe mit wesentlich verbesserten mechanischen Eigenschaften.

Im erfindungsgemäßen Verfahren können beliebige Gemische der obengenannten Polyhydroxylverbindungen eingesetzt werden. Gegebenenfalls können die Polyole auch mit weiteren Zusatzstoffen wie Kettenverlängerern, Stabilisatoren, Treibmitteln, Farbstoffen, Emulgatoren, Wasser etc. vermischt sein. Vorzugsweise sollen jedoch erfindungsgemäß unter dem Begriff Polyol bzw. Polyhydroxylverbindung die reinen Polyole verstanden werden.

Im Rahmen der vorliegenden Erfindung werden als Polyhydroxylverbindungen vorzugsweise Polyätherpolyole verwendet, da sie für die erfindungsgemäße Suspensionsherstellung besonders geeignet sind. Von besonderem Interesse sind hierbei solche Polyätherpolyole, die auf Basis von Propylenoxid oder Äthylenoxid bzw. deren Mischungen nach bekannten Verfahren erhältlich sind und Molgewichte zwischen ca. 1800 und 7000 aufweisen. Von besonderem Interesse sind solche Polyätherpolyole, die zwischen 3 und 45 Gew.-%, vorzugsweise 10 bis

30 Gew.-%, Äthylenoxid eingebaut enthalten. Hierbei kann das Äthylenoxid statistisch eingebaut sein, vorzugsweise befindet es sich aber entweder als Polymerblock an den Kettenenden des Polyätherpolyols oder als Mischblock, mit einem eingebauten Äthylenoxidanteil von mehr als 30 Gew.-%, innerhalb der Kette des Polyätherpolyols. Mischformen zwischen den genannten Polyäthertypen sind naturgemäß ebenfalls in Betracht zu ziehen.

Bevorzugt werden in die Polyhydroxylverbindungen in einer ersten Stufe durch eine radikalisch initiierte Pfropfpolymerisationsreaktion mit ungesättigten Carbonsäuren sowie gegebenenfalls weiteren olefinisch ungesättigten Monomeren freie Carboxylgruppen eingeführt, wobei vorzugsweise in Abwesenheit von organischen Lösungsmittel gearbeitet wird, so daß die Polyhydroxylverbindung als alleiniges Reaktionsmedium für die Pfropfpolymerisation dient.

Hierbei ist es möglich, die Gesamtmenge des letztlich in den erfindungsgemäßen Suspensionen als kontinuierliche Phase vorliegenden Polyols der Pfropfpolymerisationsreaktion zuzuführen; man sollte jedoch vorzugsweise so verfahren, daß zunächst nur ein Teil der Gesamtmenge des letzlich in der Suspension als kontinuierliche Phase vorliegende Polyols der Pfropfpolymerisation unterworfen wird, worauf sich eine Verdünnung der so erhaltenen Pfropfpolymerisate mit weiterem nicht modifiziertem Polyol anschließt, wobei beide genannten Polyole gleich oder verschieden sein können.

Die Dispergierung des anorganischen Füllstoffs erfolgt bevorzugt im Anschluß an die Vermischung des Pfropfpolymerisats mit dem nichtmodifizierten Polyol, obgleich es auch möglich ist, den Stabilisator erst nach dem Dispergiervorgang einzurühren. Der Dispergiervorgang findet unter innigem Durchmischen der Ausgangskomponenten bei —30 bis 180°C, vorzugsweise zwischen 5 und 45°C, während eines Zeitraums von 0,1 bis 12 Stunden statt.

Der Dispergiervorgang kann gegebenenfalls auch in Gegenwart von Lösungsmitteln wie z. B. Wasser, Aceton, Äthylacetat, Methylenchlorid, Methanol, Dimethylformamid, Toluol, Chlorbenzol oder Dioxan durchgeführt werden. Im Anschluß an den Dispergiervorgang wird dann im allgemeinen das gegebenenfalls mitverwendete Lösungsmittel destillativ entfernt. Das Arbeiten ohne Lösungsmittel ist jedoch erfindungsgemäß bevorzugt.

Die Carboxylgruppen des Pfropfpolymerisat-Stabilisators werden mit organischen oder anorganischen Basen, vor oder bevorzugt nach dem Dispergieren des Füllstoffs in der stabilisatorhaltigen Polyolphase, ganz oder teilweise neutralisiert.

Auf eine Carboxylgruppe werden hierzu 0,01 bis 2, vorzugsweise 0,1 bis 1, insbesondere 0,5 bis 1, besonders bevorzugt ca. 1 Basenäquivalente eingesetzt, beispielsweise, indem man die Base unter Rühren in die noch nicht neutralisierte Lösung des Stabilisators im Polyol oder vorzugsweise in die (z. B. frisch hergestellte) Dispersion des Füllstoffs im stabilisatorhaltigen Polyol einrührt. Es ist auch möglich, den Stabilisator selbst in bereits teilweise oder vollständig neutralisierter Form zu verwenden, falls dies aus technischen Gründen als vorteilhaft erscheint.

Als anorganische Basen kommen zur Neutralisation, z. B. Oxide, (Bi-)Carbonate, Silikate, Alkoholate oder vorzugsweise Hydroxide von Elementen auf 1. bis 3. Hauptgruppe des Periodensystems in Betracht. Natriumhydroxid und Calciumhydroxid sind besonders bevorzugt, wobei die Basen sowohl in wäßriger Lösung als auch in fester Form, gegebenenfalls als Pulver, eingesetzt werden können.

Als organische Basen kommen vorzugsweise primäre, sekundäre oder tertiäre Mono- oder Polyamine in Betracht, welche aromatischen, araliphatischen, cycloaliphatischen, heterocyclischen oder vorzugsweise aliphatischen Charakter haben können. Praktisch kommen alle Amine in Frage, die mit Carbonsäure Salze zu bilden im Stande sind. Beispielhaft seien die folgenden Verbindungen genannt:

$$N(H)_{3-x}(R)_x$$

$x = 0; 1; 2; 3$

R = Methyl-; Äthyl-; Äthanol-; Propyl-; Isopropyl-; Isopropanol-; Butyl-; Hexyl-; Dodecyl-; Stearyl-; Oleyl-; Isooctyl-; Benzyl-; Aminoäthyl-; Aminopropyl-; Abietinyl-; Aminopropyl-; Phenyl-; Dimethylaminopropyl-Rest.

Selbstverständlich sind auch Basengemische oder gemischt substituierte Amine geeignet, oder oligomere bzw. polymere oder cyclische Amine. Als besonders gut geeignet haben sich Ammoniak, Triäthylamin, Äthylendiamin und seine N-Substitutionsprodukte oder auch Äthanolamine und deren Äthoxylierungs- oder Propoxylierungsprodukte erwiesen. Auch Amidine, Enamine, Guanidine oder Aziridine sind als Neutralisierungsmittel in Betracht zu ziehen.

Unter Pfropfpolymerisaten werden im Rahmen der vorliegenden Erfindung solche Produkte verstanden, die erhalten werden, wenn man, wie oben dargelegt, ein Polyol(gemisch), gegebenenfalls in Anwesenheit eines Lösungsmittels, mit einer $\alpha,\beta$-olefinisch ungesättigten Carbonsäure vermischt, wobei gegebenenfalls noch weitere olefinisch ungesättigte Monomere ohne Carbonsäuregruppen mitverwendet werden können, und das Gemisch dann radikalisch zur Polymerisation bringt, indem man entweder einen Radikalbildner hinzufügt und auf dessen Zerfallstemperatur erhitzt, oder ohne Zusatz von Radikalbildner auf eine Temperatur erhitzt, bei der eine thermische Polymerisation einsetzt. Natürlich kann die Polymerisation auch durch energiereiche Strahlung ausgelöst werden.

Als Radikalbildner dienen die aus der Polymerisationschemie bekannten Radikalbildner, beispielsweise solche auf Basis von Azoverbindungen oder solche auf Basis von peroxidischen Verbindungen, aber auch sogenannte Redoxsysteme. Bevorzugt geeignet sind z. B. Azodiisobutyronitril, Dibenzoylperoxid, t-Butylperoxid, Cumolhydroperoxid, Di-t-Butylperoxid, Dicumylperoxid, insbesondere aber t-Butylperoctoat und schon bei relativ niedrigen Temperaturen wirksame Radikalbildner wie z. B. Peroxid/Amin, Peroxid/Ascorbinsäure, Boralkylverbindungen/Luft, Peroxid/$SO_2$, $H_2O_2/Fe^{2+}$ oder bereits bei tiefen Temperaturen zerfallende peroxidische Verbindungen wie z. B. Diisopropylpercarbonat.

Als $\alpha,\beta$-ungesättigte Carbonsäuren kommen neben Maleinsäureanhydrid, Malein- oder Fumarsäure bzw. deren Halbestern und Halbamiden oder Itaconsäure insbesondere Acrylsäure und Methacrylsäure in Betracht. Aufgrund der guten Zugänglichkeit ist Acrylsäure die bevorzugte $\alpha,\beta$-ungesättigte Carbonsäure für die Herstellung der erfindungsgemäß als Stabilisator einzusetzenden Pfropfpolymerisate.

Im allgemeinen werden zur Herstellung der Pfropfpolymerisate 1 bis 35 Gew.-%, vorzugsweise 2 bis 20 Gew.-%, bezogen auf gesamtes Pfropfpolymerisat, der $\alpha,\beta$-ungesättigten Carbonsäuren angewandt. Zweckmäßigerweise verwendet man 5–15 Gew.-% der $\alpha,\beta$-ungesättigten Carbonsäure und setzt das erhaltene Pfropfpolymerisat später weiterem unmodifizierten Polyol zu.

Als weitere olefinisch ungesättigte Monomere, die in Mengen von bis zu 60 Gew.-%, vorzugsweise 5–40 Gew.-%, bezogen auf gesamtes Pfropfpolymerisat, eingesetzt werden können, dienen beispielsweise Vinylhalogenide, Vinylester, (Meth)-Acrylnitril, (Meth)Acrylamide, (Meth)Acrylester oder Malein- bzw. Fumar- oder Itaconsäureester und Vinylaromaten. Hervorzuheben seien Vinylacetat und -propionat, (Meth)Acrylester und insbesondere Styrol. Die Mitverwendung weiterer polarer Monomerer wie etwa Aminoalkyl(meth)acrylate, Oxyalkyl(meth)acrylate, N-Alkyl(meth)acrylamide, Vinylpyrrolidon oder Vinylpyridin kann gelegentlich Vorteile bringen.

Diese neben den $\alpha,\beta$-ungesättigten Carbonsäuren gegebenenfalls mitverwendbaren Monomeren führen oftmals zu einer verbesserten Verträglichkeit des Pfropfpolymeren im Polyol bzw. auch zu einer Stabilitätsverbesserung der erfindungsgemäßen Suspension.

Erfindungsgemäß besonders bevorzugte, ganz oder teilweise zu neutralisierende Stabilisatoren sind Pfropf(co)-polymerisate aus Polyätherpolyolen, Acrylsäure bzw. Methacrylsäure sowie Styrol, da diese in den nichtmodifizierten Polyolen im allgemeinen leicht löslich sind.

Die Herstellung der Pfropfpolymerisate kann, wie bereits ausgeführt, in situ erfolgen, z. B. indem man die gesamte zur Suspensionsherstellung vorgesehene Polyolmenge mit der $\alpha,\beta$-ungesättigten Carbonsäure und gegebenenfalls weiteren Monomeren vermischt und dann die Polymerisation durchführt; vorzugsweise wird jedoch das Pfropfpolymerisat separat hergestellt und dann dem Suspensionsansatz (bezogen auf Polyol plus Füllstoff) in Mengen von 0,05–10, bevorzugt 0,2–3 Gew.-%, beigefügt.

Die erfindungsgemäß erhaltenen stabilisierten Suspensionen anorganischer Füllstoffe in Polyolen enthalten zwischen etwa 0,5 und 80 Gew.-% an Füllstoff. Vorzugsweise liegen die Füllstoffgehalte jedoch zwischen 10 und 45 Gew.-%, insbesondere zwischen 15 und 35 Gew.-%, bezogen auf gesamte Suspension.

Die Sedimentation des Füllstoffs in den bisher bekannten füllstoffhaltigen Polyolen äußert sich in zwei Effekten: Füllt man z. B. ein Reagenzglas mit einer derartigen instabilen Suspension, so bildet sich im Raum unmittelbar unterhalb des Flüssigkeitsspiegels bald eine klare Schicht der Polyhydroxylverbindung aus, die praktisch keinen Füllstoff mehr enthält. Andererseits scheidet sich am Boden des Reagenzglases eine Ablagerung von Füllstoffpartikeln ab, so daß sich nach einiger Zeit drei mehr oder weniger deutlich voneinander getrennte Schichten beobachten lassen.

Wie gefunden wurde, läßt sich der erstgenannte Effekt (serumartige Abscheidung des Dispergiermediums an der Oberfläche) mittels des erfindungsgemäßen Verfahrens sehr zuverlässig vermindern. Manche Füllstoffsuspensionen neigen jedoch trotzdem noch zur Ausbildung von Verkrustungen am Boden des Vorratsgefäßes. Es zeigte sich, daß auch diese unerwünschte Erscheinung unterdrückt werden kann, wenn man in solchen Fällen bei der Herstellung der Suspension, d. h. beim und nach dem Einarbeiten des Füllstoffs, Temperaturen über 60°C vermeidet und im Temperaturbereich zwischen −30 und +60°C, vorzugsweise +5 bis 45°C, arbeitet. Dies ist überraschend, weil zu erwarten war, daß die für die Stabilisierung der Suspension vermutlich maßgebenden Reaktionen zwischen Carboxylgruppen aufweisendem Polymerisat und Oberfläche der Füllstoffpartikel bei höheren Temperaturen schneller und vollständiger ablaufen würden als bei tiefen.

Gemäß einer weiteren Verfahrensvariante zur Herstellung der erfindungsgemäßen Suspensionen ist es auch möglich, den Dispergiervorgang und die Pfropfpolymerisationsreaktionen in einem Eintopfverfahren durchzuführen. Hierbei wird eine Mischung aus nichtmodifiziertem Polyol, anorganischem Füllstoff, ungesättigter Carbonsäure, gegebenenfalls Radikalbildner, sowie gegebenenfalls weiteren olefinisch ungesättigten Monomeren, bei einer Temperatur über der Zersetzungstemperatur des Radikalbildners, d. h. bei −30 bis 180°C, vorzugsweise +5 bis 45°C, während eines Zeitraums von 0,5 bis 12 Stunden innig durchmischt und anschließend neutralisiert.

Die erfindungsgemäß hergestellten Suspensionen können noch entgast, begast, getrocknet oder mit Zusatzstoffen versehen werden. Man

kann ihnen auch weitere Füllstoffe oder füllstoffhaltige Polyole, etwa die sogenannten Polymerpolyole, zumischen. Sie sind auch geeignet als Ausgangsmaterial für die Herstellung anderer Typen von modifizierten Polyolen, etwa als Ausgangsmaterial zur Herstellung der sogenannten Polymerpolyole durch Aufpfropfen von z. B. Styrol-Acrylnitrilgemischen (siehe z. B. die bereits oben erwähnten US-Patentschriften 3 383 351, 3 304 351, 3 304 273, 3 523 093 und 3 110 695 sowie die deutsche Patentschrift 1 152 536). In ihnen können aber auch in situ andere organische Füllstoffteilchen wie Polyharnstoffe oder Polyhydrazodicarbonamide hergestellt werden (siehe die deutschen Auslegeschriften 1 168 075 und 1 260 142 sowie die deutschen Offenlegungsschriften 2 324 134, 2 423 984, 2 512 385, 2 513 815, 2 550 796, 2 550 797, 2 550 833 und 2 550 862). Die erfindungsgemäßen Suspensionen sind besonders wertvolle Ausgangsmaterialien zur Herstellung von Polyurethanen nach dem Isocyanat-Polyadditionsverfahren, da in ihnen die gegebenenfalls zu Störungen bei der Polyurethanherstellung (z. B. Kollaps beim Verschäumen) Anlaß gebenden Carboxylgruppen neutralisiert sind. Sie eignen sich sowohl zur Herstellung von weichen, harten oder halbharten geschäumten Polyurethankunststoffen als auch zur Herstellung von nichtgeschäumten Polyurethanen, beispielsweise von Polyurethanelastomeren, -thermoplasten oder -duromeren.

Die erfindungsgemäßen Suspensionen werden zu diesem Zweck in an sich bekannter Weise mit Polyisocyanaten und gegebenenfalls weiteren hoch- und/oder niedermolekularen Polyhydroxylverbindungen bzw. Polyaminen, gegebenenfalls in Gegenwart von Katalysatoren, Treibmitteln, Stabilisatoren und weiteren an sich bekannten Zusatzstoffen umgesetzt, wobei man sich sowohl eines one-shot als auch eines Präpolymer- oder Semipräpolymerverfahrens bedienen kann.

Im folgenden soll die Herstellung der erfindungsgemäßen Suspensionen beispielhaft erläutert werden.

Die angegebenen Prozente und Teile sind Gewichtsprozente bzw. -teile, sofern nicht anders vermerkt.

Für die folgenden Beispiele wurden die Füllstoffe mit folgender Bezeichnung verwendet:

Füllstoff D: kristalliner Pyrenäen-Calcit; oberer Schnitt: 10 μm; mittlerer Teilchendurchmesser: 3 μm; feiner als 2 μm: 40%;

Füllstoff E: Dolomit; oberer Schnitt: 9 μm; Teilchendurchmesser im Mittel 3 μm; feiner als 2 μm: 65%;

Füllstoff M: Urgonischer Calcit; Rückstand auf 40-μm-Sieb: weniger als 0,1%; oberer Schnitt: 10 μm; mittlerer Teilchendurchmesser: 3 μm; feiner als 2 μm: 35%;

Füllstoff O: Mikrokristalline Champagner-Kreide; oberer Schnitt: 5 μm; mittlerer Teilchendurchmesser: 1 μm; feiner als 2 μm: 90%;

Füllstoff H: Kristallines Calciumcarbonat; oberer Schnitt: 7 μm; mittlerer Teilchendurchmesser: 1,5 μm; feiner als 2 μm: 70%.

In den Beispielen werden folgende Polyole eingesetzt:

Polyol 1: Auf Trimethylolpropan gestarteter Polyäther aus 83% Propylenoxid und endständig 17% Äthylenoxid, OH-Zahl: 28;

Polyol 2: Auf Glyzerin gestarteter Polyäther aus 90% Propylenoxid und endständig 10% Äthylenoxid; OH-Zahl: 38;

Polyol 3: Auf Trimethylolpropan gestartetes Polypropylenoxid; OH-Zahl: 56;

Polyol 4: Auf Propylenglykol gestarteter Polyäther aus 80% Propylenoxid und endständig 20% Äthylenoxid; OH-Zahl: 28;

Polyol 5: Auf Trimethylolpropan gestarteter Polyäther aus 75% Propylenoxid und 25% Äthylenoxid; OH-Zahl: 35

Die als Stabilisator verwendeten Propfpolymerisate wurden nach der folgenden allgemeinen Vorschrift hergestellt:

In einen Rührtopf, der mit Stickstoff gefüllt ist, werden das Polyol (A Teile), Acrylsäure (B Teile), Styrol (C Teile), und t-Butylperoctoat (1% der Summe $A+B+C$) eingebracht. Dann wird die Mischung unter Rühren 8 h bei 95°C gehalten, wobei unter Viskositätsanstieg die Pfropfpolymerisation abläuft. Das Reaktionsgemisch bzw. dessen Neutralisationsprodukt können direkt als Stabilisator eingesetzt werden.

Unter der Voraussetzung, daß $A+B+C=100$, werden die Propfpolymerisate im folgenden abgekürzt charakterisiert durch die Nummer des Polyols, der eingesetzten Säuremenge, sowie der eingesetzten Styrolmenge. Stabilisator 1/10/20 wäre also das Pfropfpolymerisat aus 70% Polyol 1, 10% Acrylsäure und 20% Styrol.

Die Herstellung der Suspensionen erfolgte nach folgender allgemeiner Vorschrift:

Im Basispolyol wird der Stabilisator aufgelöst, dann wird bei einer vorgegebenen Temperatur der Füllstoff eingetragen. Man rührt noch bei der angegebenen Temperatur eine Stunde intensiv und erhält eine stabile Suspension. Diese wird gegebenenfalls unter gutem Rühren mit der zur Neutralisation bzw. Teilneutralisation vorgesehenen Base versetzt und eine weitere Stunde intensiv nachgerührt.

In der nachfolgenden Tabelle ist jeweils der

zur Neutralisation verwendete Basentyp angegeben, sowie der Neutralisationsgrad in %, wobei 100%ige Neutralisation dann gegeben ist, wenn pro Mol im Stabilisator enthaltener –COOH-Gruppen 1 Basenäquivalent eingesetzt wurde.

In den Beispielen wurden folgende Basen verwendet:

a: 4-molare wäßrige NaOH
b: Calciumhydroxid, mikronisiert
c: Triäthylamin
d: Amin aus 1 Mol Ölsäure und 1 Mol Triäthylentetramin
e: Äthylendiamin
f: Äthanolamin
g: Ammoniak-Gas
h: 1,4-Diaza-bicyclo-(2,2,2)octan
i: Triäthylentetramin

Die Beurteilung der Sedimentationsstabilität der Suspensionen in den im folgenden beschriebenen Versuchen geschah wie folgt:

Die zu beurteilende Suspension wurde in einer Schichthöhe von 10 cm in ein zylindrisches Prüfglas gegossen. Das Prüfglas wurde in einen Wärmeschrank von 45°C gestellt und dort 88 h belassen. Dann wurde bei guter Beleuchtung die Abscheidung von Polyol als mehr oder weniger klare Oberschicht wie folgt bewertet:

Maßzahl obere Sedimentation ($S_1$)

$S_1$ = 1: keinerlei Abscheidung zu erkennen
2: Abscheidung weniger als 1 mm dick
3: Abscheidung zwischen 1 und 3 mm dick
4: Abscheidung mehr als 3 mm dick.

Dann wurde bei guter Beleuchtung geprüft, ob sich am Boden des zylindrischen Prüfglases eine Bodenschicht mit Sedimentationshorizont abgesetzt hatte. Die Beurteilung wurde wie folgt vorgenommen:

Maßzahl untere Sedimentation ($S_2$)

$S_2$ = 1: keine Abscheidung zu erkennen
2: Andeutung eines Sedimentationshorizontes
3: deutliche Abscheidung einer Bodenschicht.

Schließlich wurde das Erscheinungsbild der bei 45° C gelagerten Proben beurteilt:

V = 1: homogen, einwandfrei fließfähig;
2: geronnen, käsig, flockig, aber noch fließfähig;
3: verdickt, geronnen, erstarrt, kaum fließfähig.

Aus anwendungstechnischer Sicht ist das Erscheinungsbild V = 1 als positiv zu bewerten, während Gerinnungserscheinungen und Verdickungen zu Inhomogenitäten bzw. erschwerter Handhabung früher und negativ bewertet werden.

| | Beispiel-Nr. 1**) | 2 | 3 | 4 | 5 | 6 | 7 | 8**) | 9 | 10**) |
|---|---|---|---|---|---|---|---|---|---|---|
| Polyoltyp | 1 | 1 | 1 | 1 | 1 | 1 | 1 | 2 | 2 | 3 |
| Füllstofftyp | D | D | D | E | M | O | H | D | D | D |
| Füllstoffgehalt der Suspension (%) | 30 | 30 | 30 | 30 | 30 | 30 | 30 | 30 | 30 | 30 |
| Stabilisatortyp | – | 1/10/10 | 2/10/20 | 1/10/10 | 1/10/20 | 1/10/10 | 1/10/10 | – | 2/10/20 | – |
| Stabilisatorgehalt der Suspension (%) | – | 0,6 | 0,5 | 0,7 | 0,4 | 0,8 | 0,9 | – | 0,6 | – |
| Basentyp | – | c | c | c | g | c | c | – | f | – |
| Neutralisationsgrad (%) | – | 10 | 100 | 80 | 50 | 100 | 30 | – | 50 | – |
| Herstellungstemperatur°C | 20 | 25 | 20 | 28 | 22 | 22 | 20 | 25 | 23 | 22 |
| Beurteilung $S_1$ | 3 | 1 | 1 | 1 | 1 | 1 | 2 | 2 | 1 | 3 |
| Beurteilung $S_2$ | 3 | 2 | 1 | 2 | 1 | 2 | 1 | 3 | 1 | 3 |
| Beurteilung V | 1–2 | 1 | 1 | 1 | 1 | 1 | 1 | 1–2 | 1 | 2 |

**) Vergleichsversuch ohne Basenzusatz.

| | Beispiel-Nr. 11 | 12 | 13 | 14**) | 15 | 16**) | 17**) | 18**) | 19**) | 20 |
|---|---|---|---|---|---|---|---|---|---|---|
| Polyoltyp | 3 | 3 | 3 | 4 | 4 | 5 | 5 | 5 | 5 | 5 |
| Füllstofftyp | D | D | D | D | D | D | D | D | D | D |
| Füllstoffgehalt der Suspension (%) | 30 | 30 | 30 | 30 | 30 | 15 | 30 | 15 | 30 | 15 |
| Stabilisatortyp | 3/10/30 | 3/10/30 | 3/10/30 | – | 4/10/10 | – | – | 5/10/10 | 5/10/10 | 5/10/10 |
| Stabilisatorgehalt der Suspension (%) | 0,25 | 0,5 | 0,3 | – | 0,6 | – | – | 1,2 | 0,5 | 1,2 |
| Basentyp | c | h | – | – | c | – | – | – | – | i*) |
| Neutralisationsgrad (%) | 90 | 100 | – | – | 85 | – | – | – | – | 50 |
| Herstellungstemperatur°C | 25 | 25 | 25 | 25 | 22 | 25 | 25 | 23 | 23 | 23 |
| Beurteilung $S_1$ | 1 | 1 | 1 | 2 | 1 | 3 | 2 | 1 | 1 | 2 |
| Beurteilung $S_2$ | 1 | 1 | 1 | 3 | 1 | 3 | 2 | 2 | 1 | 1 |
| Beurteilung V | 1 | 1 | 1 | 1–2 | 1 | 2 | 3 | 1 | 1 | 1 |

*) Base dem Ansatz vor Füllstoffzugabe zugesetzt.

**) Vergleichsversuch ohne Basenzusatz.

| | Beispiel-Nr. 21 | 22 | 23 | 24 | 25 | 26 | 27 | 28 | 29 | 30 |
|---|---|---|---|---|---|---|---|---|---|---|
| Polyoltyp | 5 | 5 | 5 | 5 | 5 | 5 | 5 | 5 | 5 | 5 |
| Füllstofftyp | D | D | D | D | O | D | D | D | D | D |
| Füllstoffgehalt der Suspension (%) | 30 | 30 | 30 | 30 | 30 | 30 | 30 | 30 | 40 | 40 |
| Stabilisatortyp | 5/10/10 | 5/10/10 | 5/10/10 | 5/10/10 | 5/10/10 | 1/10/20 | 5/10/10 | 5/10/10 | 5/10/20 | 5/10/10 |
| Stabilisatorgehalt der Suspension (%) | 0,5 | 0,5 | 0,5 | 1,5 | 0,75 | 0,3 | 0,5 | 0,55 | 0,75 | 0,75 |
| Basentyp | c | b | a | a | h | c | d | e | c | c |
| Neutralisationsgrad (%) | 95 | 100 | 100 | 90 | 100 | 100 | 100 | 95 | 6 | 12 |
| Herstellungstemperatur°C | 23 | 23 | 23 | 23 | 22 | 20 | 20 | 20 | 26 | 26 |
| Beurteilung $S_1$ | 1 | 1 | 1 | 1 | 1 | 1 | 1 | 1 | 1 | 1 |
| Beurteilung $S_2$ | 1 | 1−2 | 1 | 1−2 | 1 | 1 | 1 | 1−2 | 1−2 | 1 |
| Beurteilung V | 1 | 1 | 1 | 1 | 1 | 1 | 1 | 1 | 1 | 1 |

Aus den tabellarisch zusammengefaßten Beispielen geht hervor, daß die in den erfindungsgemäß beanspruchten Mengenverhältnissen beigegebenen Pfropfpolymerisate eine deutlich stabilisierende Wirkung haben. Der Zusatz sowohl organischer als auch anorganischer Basen zu Neutralisationszwecken verschlechtert die Stabilisierwirkung nicht, tendenziell ist eher eine Verbesserung angedeutet. Somit sind erfindungsgemäß lagerstabile Dispersionen zugänglich, deren Gehalt an freien Carboxylgruppen auf die Bedürfnisse des Isocyanat-Polyadditionsverfahrens eingestellt werden kann.

Anhand der nach Beispiel 26, 27 und 28 hergestellten Dispersionen soll beispielhaft die Verarbeitung zu geschäumten Polyurethankunststoffen dargestellt werden:

33,3 Teilen der jeweiligen Dispersion werden mit 66,7 Teilen eines durch Anlagerung von 87 Teilen Propylenoxid und 13 Teilen Äthylenoxid an Trimethylolpropan erhaltenen Polyäthers mit einer OH-Zahl von 28 verdünnt.

Sodann setzt man schnell unter Rühren hinzu:

2,9 Teile Wasser
0,5 Teile Diazabicyclooctan
0,8 Teile N-Methylmorpholin
0,1 Teile Bis-(N,N-dimethylaminoäthyl)-äther
0,03 Teile Dibutylzinndilaurat und
1,1 Teile eines handelsüblichen Polyäthersiloxan-Schaumstabilisators

sowie anschließend 36 Teile eines Gemisches mit einem NCO-Gehalt von 44,5% aus 80% Toluylendiisocyanat und 20% eines handelsüblichen, rohen Diphenylmethandiisocyanats.

Die Verschäumung verläuft problemlos. Der erhaltene Schaum hat ein Raumgewicht von 40 kg/m$^3$ und folgende mechanische Eigenschaften:

| | Dispersion | | |
|---|---|---|---|
| | 26 | 27 | 28 |
| Zugfestigkeit (KPa) (DIN 53 571) | 140 | 135 | 140 |
| Bruchdehnung (%) (DIN 53 571) | 200 | 180 | 175 |
| Stauchhärte bei 40% (KPa) (DIN 53 577) | 3,6 | 3,7 | 3,7 |
| Druckverformungsrest bei 90% (%) (DIN 53 572) | 14,0 | 14,2 | 14,4 |

Zur Verschäumung der vergleichbaren, jedoch nicht neutralisierten Dispersionen aus Beispiel 13, 18 und 19 muß die Menge des Silikonstabilisators um ca. 25%, die Menge des basischen Mischkatalysators um ca. 15% erhöht werden, um vergleichbare Schäume zu erhalten.

Die gute Relation von Bruchdehnung zu Stauchhärte ermöglicht es, aus den erfindungsgemäßen Dispersionen bei geringem Gewicht sehr tragfähige Polsterschaumstoffe herzustellen.

**Patentansprüche**

1. Lagerstabile Suspensionen aus

(1) 0,5 bis 80 Gew.-% (bezogen auf gesamte Suspension) eines anorganischen Füllstoffs in
(2) 20 bis 99,5 Gew.-% (bezogen auf gesamte Suspension) an Polyhydroxylverbindungen mit aliphatisch oder cycloaliphatisch gebundenen Hydroxylgruppen,

wobei die Komponente (2) als Stabilisator 0,05 bis 10 Gew.-%, bezogen auf (1) + (2), eines Pfropfpolymerisats enthält, welches durch radikalische Polymerisation von

(a) 1 bis 35 Gew.-%, bezogen auf Pfropfpolymerisat, einer $\alpha,\beta$-olefinisch ungesättigten Carbonsäure sowie
(b) 0 bis 60 Gew.-%, bezogen auf Pfropfpolymerisat, an weiteren olefinisch ungesättigten Monomeren

in Gegenwart einer Polyhydroxylverbindung hergestellt wurde, dadurch gekennzeichnet, daß die Carboxylgruppen des Pfropfpolymerisats ganz oder teilweise durch organische oder anorganische Basen neutralisiert sind.

2. Suspensionen nach Anspruch 1, dadurch gekennzeichnet, daß als Polyhydroxylverbindungen (2) Hydroxylgruppen aufweisende Polyäther verwendet werden.

3. Suspensionen nach Anspruch 1 und 2, dadurch gekennzeichnet, daß als anorganische Füllstoffe (1) solche auf Basis von Calciumcarbonat, insbesondere Kreiden, verwendet werden.

4. Suspensionen nach Anspruch 1–3, dadurch gekennzeichnet, daß als $\alpha,\beta$-olefinisch ungesättigte Carbonsäure (a) (Meth)-Acrylsäure verwendet wird.

5. Suspensionen nach Anspruch 1–4, dadurch gekennzeichnet, daß als weiteres Monomeres (b) Styrol verwendet wird.

6. Suspensionen nach Anspruch 1–5, dadurch gekennzeichnet, daß bei ihrer Herstellung bei Temperaturen zwischen 5 und 45°C gearbeitet wurde.

7. Verwendung der Suspensionen nach Anspruch 1–6 zum Aufbau von geschäumten oder nicht geschäumten Kunststoffen nach dem Isocyanat-Polyadditionsverfahren.

**Claims**

1. Suspensions which are stable in storage prepared from

(1) 0.5 to 80% by weight (based on the total suspension) of an inorganic filler in
(2) 20 to 99.5% by weight (based on the total suspension) of polyhydroxyl compounds containing aliphatically or cycloaliphatically linked hydroxyl groups,

component (2) containing from 0.05 to 10% by weight, based on (1) + (2), of a graft polymer as a stabilizer, which was produced by radical polymerization of

(a) from 1 to 35% by weight, based on the graft polymer, of an $\alpha,\beta$-olefinically unsaturated carboxylic acid and
(b) from 0 to 60% by weight, based on the graft polymer, of other olefinically unsaturated monomers,

in the presence of a polyhydroxyl compound, characterized in that the carboxyl groups of the graft polymer are completely or partially neutralized by organic or inorganic bases.

2. Suspensions according to Claim 1, characterized in that hydroxyl-group-containing polyethers are used as polyhydroxyl compounds (2).

3. Suspensions according to Claim 1 and 2, characterized in that fillers based on calcium carbonate, in particular chalks, are used as inorganic fillers (1).

4. Suspensions according to Claims 1 to 3, characterized in that (meth)-acrylic acid is used as the $\alpha,\beta$-olefinically unsaturated carboxylic acid (a).

5. Suspensions according to claims 1 to 4, characterized in that styrene is used as the other monomer (b).

6. Suspensions according to Claims 1 to 5, characterized in that production is carried out at temperatures of between 5 and 45° C.

7. Use of the suspensions according to Claims 1 to 6 for building up foamed or unfoamed plastics by the isocyanate polyaddition process.

**Revendications**

1. Suspensions stables à l'entreposage, de

(1) 0,5 à 80% en poids (par rapport à la suspension totale) d'une charge inorganique dans
(2) 20 à 99,5% en poids (par rapport à la suspension totale) de composés polyhydroxyliques portant des groupes hydroxyle en liaison aliphatique ou cycloaliphatique,

le composant (2) contenant comme stabilisant 0,05 à 10% en poids, par rapport à (1) + (2), d'un produit greffé de polymérisation qui a été formé par polymérisation radicalaire de

(a) 1 à 35% en poids, par rapport au produit greffé de polymérisation, d'un acide carboxylique à insaturation $\alpha,\beta$-oléfinique ainsi que
(b) 0 à 60% en poids, par rapport au produit greffé de polymérisation, d'autres monomères à insaturation oléfinique, en présence d'un composé polyhydroxylique,

caractérisées en ce que les groupes carboxyle du produit greffé de polymérisation sont neutralisés en totalité ou en partie par des bases organiques ou inorganiques.

2. Suspensions suivant la revendication 1, caractérisées en ce qu'on utilise comme composés polyhydroxyliques (2) des polyéthers porteurs de groupes hydroxyle.

3. Suspensions suivant l'une des revendications 1 et 2, caractérisées en ce qu'on utilise comme charges inorganiques (1) des charges à base de carbonate de calcium, notamment de craie.

4. Suspensions suivant l'une des revendications 1 à 3, caractérisées en ce qu'on utilise comme acide carboxylique à insaturation $\alpha,\beta$-oléfinique (a) l'acide (méth)-acrylique.

5. Suspensions suivant l'une des revendications 1 à 4, caractérisées en ce qu'on utilise le styrène comme autre monomère (b).

6. Suspensions suivant l'une des revendications 1 à 5, caractérisées en ce qu'on opère pour leur préparation à des températures comprises entre 5 et 45° C.

7. Utilisation des suspensions suivant l'une des revendications 1 à 6 pour la production de matières plastiques transformées ou non en mousses par le procédé de poly-addition d'un isocyanate.